# EUROPÄISCHE PATENTSCHRIFT

(11) **EP 1 106 569 B1**
(45) Veröffentlichungstag und Bekanntmachung des Hinweises auf die Patenterteilung: **09.04.2003**
(21) Anmeldenummer: 00122776.8
(22) Anmeldetag: 19.10.2000
(51) Int. Cl.: C01B 3/32

(54) **Verdampfer für ein Brennstoffzellensystem**
Vaporizer for a fuel cell system
Vaporisateur pour un système de piles à combustible

(30) Priorität: 02.12.1999 DE 19958179
(43) Veröffentlichungstag der Anmeldung: 13.06.2001
(73) Patentinhaber: Ballard Power Systems AG, 73230 Kirchheim / Teck-Nabern (DE)
(72) Erfinder: Boneberg, Stefan, 72660 Beuren (DE); Schüssler, Martin, Dr., 89073 Ulm (DE)
(74) Vertreter: Beyer, Andreas, Dr.

(56) Entgegenhaltungen:
- EP-A- 0 206 608
- EP-A- 0 878 442
- EP-A- 0 920 064
- US-A- 4 746 329

## Beschreibung

Die Erfindung betrifft einen Verdampfer für ein Polymer-Elektrolytmembran-Brennstoffzellensystem gemäß dem Oberbegriff des unabhängigen Anspruchs.

Zur Verdampfung von Medien, etwa Wasser oder Brennstoff, in einem Polymer-Elektrolytmembran-Brennstoffzellensystem sind Verdampfer bekannt, die mit heißem Gas oder einem anderen Wärmeträgermedium wie Thermoöl beheizt werden. Es sind auch direkt beheizte Verdampfer bekannt.

Aus der DE 197 20 294 ist ein Verdampfer für ein solches Brennstoffzellensystem bekannt, bei dem ein Wasser/Methanol-Gemisch bei hohen Temperaturen verdampft wird, indem der Verdampfer mit der Abwärme einer stark exothermen Reaktion erhitzt wird.

Der Erfindung liegt die Aufgabe zugrunde, einen Verdampfer für ein Polymer-Elektrolytmembran-Brennstoffzellensystem anzugeben, der eine Nutzung thermischer Energie im Polymer-Elektrolytmembran-Brennstoffzellensystem erlaubt und der für den Einsatz in einem brennstoffzellengetriebenen Fahrzeug geeignet ist.

Diese Aufgabe wird bei einer gattungsgemäßen Vorrichtung gemäß Anspruch 1 durch die Merkmale im kennzeichnenden Teil des Anspruchs gelöst.

Gemäß der Erfindung wird der Verdampfer durch die Abwärme der Polymer-Elektrolytmembran-Brennstoffzelleneinheit erwärmt. Vorzugsweise wird dabei der Partialdruck des zu verdampfenden Mediums reduziert, so daß der Partialdruck unterhalb des Sättigungsdampfdrucks bei der gegebenen Verdampfertemperatur liegt.

Dadurch kann die Brennstoffzellenabwärme im Kühlkreislauf für das Gaserzeugungssystem des Brennstoffzellensystems genutzt werden, obwohl sich die Polymer-Elektrolytmembran-Brennstoffzelleneinheit auf einem Temperaturniveau befindet, welches an sich nicht ausreichend ist, um für eine Verdampfung genutzt zu werden. Dadurch kann der Gesamtwirkugnsgrad des Systems erhöht werden. Zudem kann ein im Kühlkreislauf vorgesehener Kühler entlastet werden.

In einer weiteren vorteilhaften Ausgestaltung wird eine Brennstoffzelleneinheit verwendet, welche eine Betriebstemperatur über der Siedetemperatur des zu verdampfenden Mediums erlaubt.

Die Erfindung ist daher besonders für Brennstoffzellensysteme geeignet, welche in Fahrzeugen eingesetzt werden.

Ein übliches Brennstoffzellensystem besteht aus einer Brennstoffzelleneinheit, welche von einer Gaserzeugungseinheit mit einem wasserstoffreichen Medium versorgt wird. Die Gaserzeugungseinheit weist einen Reformer und einen Verdampfer auf. Der Verdampfer ist dazu vorgesehen, ein wasserstoffhaltiges Fluid und/oder Wasser zu verdampfen, vorzugsweise Methanol und/oder Methanol/Wasser-Gemisch. Aus dem verdampften Medium wird im Reformer ein wasserstoffreiches Gas oder Gasgemisch erzeugt, welches einer Brennstoffzelle zugeführt und dort zur Energieerzeugung genutzt wird.

Die übliche Brennstoffzelle besteht aus einer Anode und einer Kathode, welche durch eine Polymerelektrolytmembran getrennt sind. Vorzugsweise sind mehrere Brennstoffzellen seriell und/oder parallel so zu einer Brennstoffzelleneinheit verschaltet, daß sie ein ausreichendes elektrisches Spannungsniveau und Leistungsniveau zum Betreiben von Verbrauchern, insbesondere eines Fahrzeugs, geeignet sind.

Die Betriebstemperatur üblicher Brennstoffzellen mit Polymerelektrolytmembranen liegt unterhalb von 100°C. Die Brennstoffzellenabwärme im Kühlkreislauf der Brennstoffzelleneinheit konnte daher bisher für die Gaserzeugung eines wasserstoffreichen Gases aus einem Brennstoff, zu der üblicherweise ein Verdampfer gehört, nicht genutzt werden.

Ein erfindungsgemäßer Verdampfer weist jedoch Mittel auf, um den Verdampfer mit der Brennstoffzellenabwärme zu beheizen.

In einer bevorzugten Ausführung der Erfindung wird, um eine nennenswerte Menge des zu verdampfenden Mediums zu verdampfen, vorzugsweise der Partialdruck des Mediums abgesenkt, so daß der Partialdruck unterhalb des Sättigungsdampfdrucks bei der aktuellen Verdampfertemperatur liegt. Die Verdampfungsrate des Mediums steigt an.

Mit dieser Maßnahme ist es möglich, einen Verdampfer auch mit einem Medium zu beheizen, welches eine Temperatur aufweist, die unterhalb des Siedepunkts des Mediums bei den herrschenden Umgebungsbedingungen liegt.

Zweckmäßig sind Mittel, mit denen eine Verdünnung des zu verdampfenden Mediums möglich ist. So kann eine Zudosierung von Luft in den Verdampfer umfassen, so daß das zu verdampfende Medium verdünnt wird. Dies ist besonders vorteilhaft, wenn eine Vorrichtung zur partiellen Oxidation von CO im Brennstoffzellensystem vorgesehen ist. Es ist auch möglich, eine derartige Verdünnung durch Zudosierung von Inertgas in den Verdampfer zu erreichen.

Eine weitere günstige Möglichkeit besteht darin, als Mittel zur Reduzierung des Partialdrucks eine Zudosierung von Kathodenabgas der Brennstoffzelleneinheit in den Verdampfer vorzusehen.

Eine weitere günstige Möglichkeit zur Reduzierung des Partialdrucks des zu verdampfenden Mediums besteht darin, eine Rückführung des Reformats in den Verdampfer vorzusehen.

Eine weitere günstige Möglichkeit besteht darin, Mittel zur Reduzierung des Totaldrucks im Verdampfer vorzusehen. So verdampft Methanol bei Normaldruck bei etwa 65°C, während die Siedetemperatur bei höheren Drücken, wie sie in einem Brennstoffzellensystem üblich sind, deutlich höher liegen.

In einer weiteren bevorzugten Ausführung der Erfindung ist die Verwendung einer Brennstoffzelleneinheit mit einer Betriebstemperatur oberhalb der Siedetemperatur des zu verdampfenden Mediums vorgesehen, vorzugsweise oberhalb von 120°C.

Selbstverständlich können die bevorzugten Ausführungsformen auch kombiniert werden.

In einem. Brennstoffzellensystem sind Kühler zur Abfuhr von Abwärme stark belastet. Ein Vorteil der Erfindung ist, daß derartige Kühler entlastet werden. Dies ist besonders bei Fahrzeugen günstig. Der Wirkungsgrad des Gesamtsystems wird erhöht.

## Patentansprüche

1. Verdampfer für ein Brennstoffzellensystem mit einer Polymer-Elektrolytmembran-Brennstoffzelleneinheit, wobei die Brennstoffzelleneinheit einen Kühlkreislauf aufweist, und wobei der Verdampfer zumindest einen Verdampfungsraum zum Verdampfen eines Mediums in dem Brennstoffzellensystem und mindestens einen mit dem Verdampfungsraum in Wärmeverbindung stehenden Wärmeträgerraum aufweist,
**dadurch gekennzeichnet,**
**daß** der Wärmeträgerraum Bestandteil des Kühlkreislaufes der Brennstoffzelleneinheit ist.

2. Verdampfer nach Anspruch 1,
**dadurch gekennzeichnet,**
**daß** Mittel vorgesehen sind, um den Partialdruck des zu verdampfenden Mediums unter den Sättigungsdampfdruck des Mediums bei gegebener Temperatur im Verdampfer zu reduzieren.

3. Verdampfer nach Anspruch 2,
**dadurch gekennzeichnet,**
**daß** die Mittel eine Zudosierung von Luft in den Verdampfer umfassen.

4. Verdampfer nach Anspruch 2,
**dadurch gekennzeichnet,**
**daß** die Mittel eine Zudosierung von Inertgas in den Verdampfer umfassen.

5. Verdampfer nach Anspruch 2,
**dadurch gekennzeichnet,**
**daß** die Mittel eine Zudosierung von Kathodenabgas der Brennstoffzelleneinheit in den Verdampfer umfassen.

6. Verdampfer nach Anspruch 2,
**dadurch gekennzeichnet,**
**daß** die Mittel eine Rückführung eines Reformats in den Verdampfer umfassen.

7. Verdampfer nach Anspruch 2,
**dadurch gekennzeichnet,**
**daß** die Mittel eine Pumpe zur Reduzierung des Totaldrucks im Verdampfer umfassen.

8. Verdampfer nach Anspruch 1,
**dadurch gekennzeichnet,**
**daß** die Brennstoffzelleneinheit bei einer Betriebstemperatur einsetzbar ist, die oberhalb der Siedetemperatur des zu verdampfenden Mediums liegt.

## Claims

1. Vaporizer for a fuel cell system with a polymer electrolyte membrane fuel cell unit, wherein the fuel cell unit comprises a cooling circuit, and wherein the vaporizer comprises at least one evaporation space for the evaporation of a medium in the fuel cell system and at least one heat carrier space in thermal communication with the evaporation space, **characterised in that** the heat carrier space is part of the cooling circuit of the fuel cell unit.

2. Vaporizer according to claim 1,
**characterised in that** means are provided in order to reduce the partial pressure of the medium to be evaporated to below the saturated vapour pressure of the medium at a given temperature in the evaporator.

3. Vaporizer according to claim 2,
**characterised in that** the means comprise metering air into the evaporator.

4. Vaporizer according to claim 2,
**characterised in that** the means comprise metering inert gas into the evaporator.

5. Vaporizer according to claim 2,
**characterised in that** the means comprise metering cathode exhaust gas from the fuel cell unit into the evaporator.

6. Vaporizer according to claim 2,
**characterised in that** the means comprise a returning of a reformate into the evaporator.

7. Vaporizer according to claim 2,
**characterised in that** the means comprise a pump for reducing the total pressure in the evaporator.

8. Vaporizer according to claim 1,
**characterised in that** the fuel cell unit is adapted to be used at an operating temperature that lies above the boiling temperature of the medium to be evaporated.

## Revendications

1. Vaporisateur pour un système de piles à combustible avec une unité de piles à combustible à membrane électrolytique en polymère, l'unité de piles à combustible présentant un circuit de refroidissement et le vaporisateur présentant au moins un compartiment de vaporisation pour l'évaporation d'un fluide dans le système de piles à combustible et au moins un compartiment caloporteur en contact thermique avec le compartiment de vaporisation,
**caractérisé en ce que**
le compartiment caloporteur fait partie du circuit de refroidissement de l'unité de piles à combustible.

2. Vaporisateur selon la revendication 1,
**caractérisé en ce que**
des moyens sont prévus pour permettre, à une température donnée, de réduire, dans le vaporisateur, la pression partielle du fluide à vaporiser de manière à ramener celle-ci en dessous de la pression de vapeur saturée du fluide.

3. Vaporisateur selon la revendication 2,
**caractérisé en ce que**
lesdits moyens comprennent un dosage pour l'addition d'air dans le vaporisateur.

4. Vaporisateur selon la revendication 2,
**caractérisé en ce que**
lesdits moyens comprennent un dosage pour l'addition de gaz inerte dans le vaporisateur.

5. Vaporisateur selon la revendication 2,
**caractérisé en ce que**
lesdits moyens comprennent un dosage pour l'addition, dans le vaporisateur, de gaz d'évacuation de cathode de l'unité de piles à combustible.

6. Vaporisateur selon la revendication 2,
**caractérisé en ce que**
lesdits moyens comprennent un moyen permettant le réacheminement d'un reformat vers le vaporisateur.

7. Vaporisateur selon la revendication 2,
**caractérisé en ce que**
lesdits moyens comprennent une pompe pour la réduction de la pression totale dans le vaporisateur.

8. Vaporisateur selon la revendication 1,
**caractérisé en ce que**
l'unité de piles à combustible est utilisable à une température de service qui est supérieure à la température d'ébullition du fluide à vaporiser.
